# EUROPEAN PATENT SPECIFICATION

(11) **EP 2 013 506 B1**
(45) Date of publication and mention of the grant of the patent: **29.06.2011**
(21) Application number: 07748064.8
(22) Date of filing: 25.04.2007
(51) Int. Cl.: F16D 55/227

(54) **A SLIDING ARRANGEMENT FOR A DISK BRAKE**
GLEITANORDNUNG FÜR EINE SCHEIBENBREMSE
DISPOSITIF COULISSANT POUR UN FREIN A DISQUE

(30) Priority: 25.04.2006 SE 0600923
(43) Date of publication of application: 14.01.2009
(73) Proprietor: Volvo Lastvagnar AB, 405 08 Göteborg (SE)
(72) Inventor: BAGGE, Lars, 413 15 Göteborg (SE); EDGREN, Claes, 435 39 Mölnlycke (SE)
(74) Representative: Fröhling, Werner Otto
(86) International application number: PCT/SE2007/000399
(87) International publication number: WO 2007/123471

(56) References cited:
- WO-A1-00/12912
- WO-A1-03/025413
- DE-A1- 3 032 513
- GB-A- 2 057 076
- GB-A- 2 311 107
- GB-A- 2 311 107
- JP-A- 11 117 959
- US-A- 4 372 428
- US-A- 5 439 084

## Description

The present invention relates to a sliding arrangement for a disk brake for a vehicle, such as a truck, a bus or the like, comprising a calliper adapted to engage a brake disk and two support bearings for fixing said calliper to a brake support of the vehicle so that the calliper is axially slidable relative to the brake disk.

Document DE2840374 relates to a floating calliper spot type disc brake, in particular for automotive vehicles, with a brake calliper axially slidably guided on a brake support member and arranged between arms of the brake support member, and a spring clamping the brake calliper relative to the brake support member radially. The spring urges the of brake calliper 10 toward its guiding surfaces. DE3032513 relates to an excentric bushing arrangement obviating the need for a separate spring.

In order to allow for thermal expansion of the parts and possible deformation during hard braking, the sliding arrangement according to the invention has a first support bearing including a first guide pin and a first guide bushing having substantially no play and a second support bearing includes a second guide pin and a second guide bushing having a play.

A disk brake of such kind is known from WO 03/025413 A1, A sliding disk brake includes a fixed and a floating bearing where the floating bearing includes a guide bushing having an inner opening with an oval cross-section in which a circular bearing bolt is inserted. The idea is to allow for movements of the bearing bolt in only one direction in the guide bushing. The purpose is to take up production tolerances and allow for movements of the calliper during braking of the vehicle, and at the same time remove brake noise such as rattle. This solution may compensate for some tolerances when producing the brake, i.e. when the brake is new, but it will not be able to compensate for the tolerances caused by wear. Thus, a certain play and some rattle noise will be unavoidable, both when the brake is new and especially when the brake has been used. Similar bushings with different hole dimensions and shapes are known in the art.

However, the drawback of the known type of disk brake is that the brake calliper is loosely mounted when the disk brake is inactive. This results in a rattling noise from the disk brakes of a vehicle in particular when driven on an uneven surface where vibrations are transferred to the disk brake calliper, whereby a knocking noise is produced in the direction perpendicular to the two guide sleeves of the sliding disk brake due to the tolerances of the floating bearing.

The problem faced by all brake manufacturers is to allow for the calliper to slide freely on two guide pins in order to provide for a floating calliper. The play between the guide pin and the bushing should therefore be as small as possible to avoid noise. At the same time, production tolerances must be compensated for in order to avoid the calliper to jam on the guide pins. Also, the calliper is not allowed to tilt which could cause further jamming. Some play is therefore necessary. One common solution is to use asymmetric mounting means when mounting the calliper. These asymmetric mounting means are adjusted to compensate for the tolerances during mounting of the brake. Although these mounting means may work well when the brake is new, they will not compensate for wear and also not for dynamic loads caused by the braking action. JP 55054732 and JP 58061340 describe such disk brakes. GB 2311107 discloses a sliding arrangement for a disc brake according to the preamble of claim 1.

Further examples of providing a noise-free disk brake with a sliding calliper are shown in e.g. DE 4411700, DE 2514383, JP 2002/276699, JP 2000/027904 and JP 11117959. Also these solutions may work when the disk brake is new, but they will not compensate for wear and also not for dynamic loads caused by the braking action.

This results in a rattling noise from the disk brakes of a vehicle in particular when driven on an uneven surface where vibrations are transferred to the disk brake calliper, whereby a knocking noise is produced in the direction perpendicular to the two guide sleeves of the sliding disk brake due to the tolerances of the floating bearing. This rattling noise is produced when the disk brakes are inactive and can be heard in the cabin of the vehicle, in particular in a bus with the engine in the rear. This problem is mostly noticeable on heavy vehicles, such as trucks or buses, since the mass of the parts in a brake are greater than on a passenger car. On this background it is the object of the present invention to provide a sliding arrangement for a disk brake of the initially mentioned kind where the noise during the inactive brake state is reduced or even eliminated.

This object is achieved by a sliding arrangement for a disk brake according to claim 1.

By the invention, the advantages of a disk brake with a floating calliper are maintained, but the noise in the inactive brake state is eliminated. A disk brake according to the invention has the desired ability to provide position tolerances between the two guide pins and at the same time to eliminate the knocking noise caused by the play between a guide pin and a bushing. Further, the inventive sliding arrangement can make up for tolerances caused by wear on the guide pin and/or bushing.

According to the invention, the bushing is mounted in such a manner that the second guide pin is asymmetrically mounted with regards to the second bushing, i.e. the centre of the second guide pin is offset a distance to the centre of the second bushing in a plane defined between the centre axes of first and second guide pins respectively. Accordingly, the bushing will be compressed or pre-tensioned in a direction passing through the two guide pins. Moreover, the bushing is provided with an inner diameter that is larger than the diameter of the guide pin. Hereby, the second guide pin centre is slightly offset relative to the centre of the bushing so that a force is created between the guide pin and the bushing wall. The resilient material is dimensioned to take up all production tolerances and also to allow for a predetermined minimum pre-tensioning of the bushing for all tolerance cases. Sliding forces in the axial direction of the guide pins must be balanced with appropriate friction between the guide pin and the bushing material. When forces on the calliper act in perpendicular direction, the contact surface of the guide pin will slide or roll in a radial direction in the bushing instead of bouncing from side to side. Due to the pre-tensioning, the contact surface of the guide pin will be in constant contact with the bushing, thus the noise will be eliminated.

Preferably, the annular outer member of the bushing is a steel ring and the resilient material is bonded to the inner side of the outer ring. Moreover, the annular inner member is preferably made of a low friction material, such as brass, bonded to the resilient material. The resilient material is preferably rubber or plastic.

In a further embodiment of the invention, the bushing displays a first compression resistance in a radial direction of the bushing corresponding to a plane defined by the two guide pins, and a second compression resistance in a radial direction of the bushing perpendicular to said guide pin plane, wherein the first compression resistance is lower than the second compression resistance. Preferably, the lower first compression resistance is provided by one or more cavities in at least one section of the annular resilient material. Hereby, an advantageous difference in stiffness in different directions of the bushing is obtainable in a simple manner. The resilient material layer is preferably relative thick so that a substantial difference in the compression resistances in the two directions can be provided.

In the following, the invention is described in more detail with reference to the accompanying drawings, in which
- Figure 1: is a partial view of a disk brake according to the invention;
- Figure 2: is a detailed sectional exploded view of a support bearing according to the invention, and
- Figure 3: is a detailed view of a support bearing mounted in a calliper according to the invention.

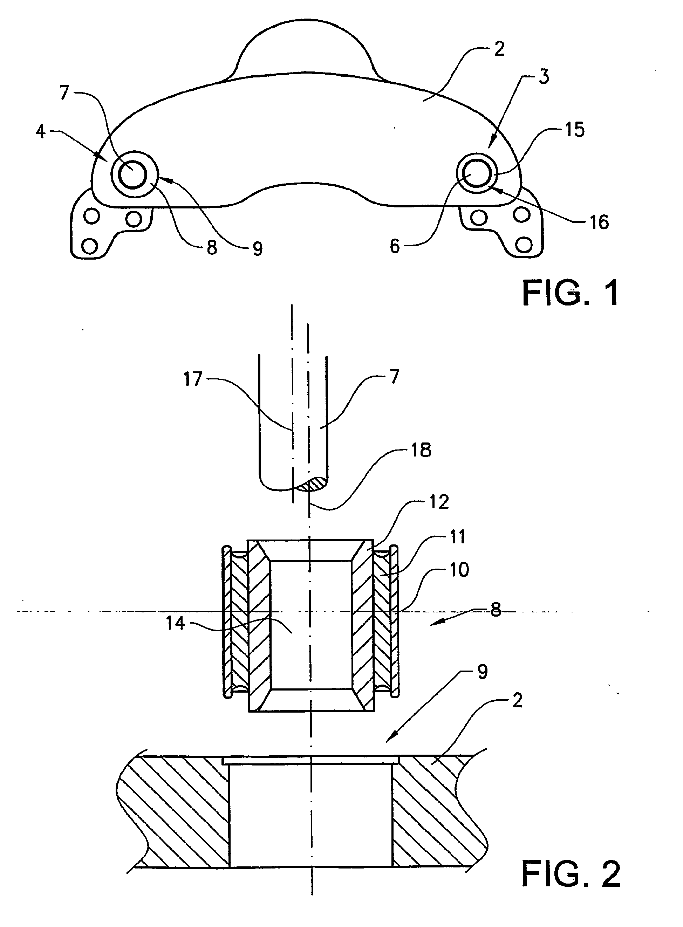

Figure 1 shows a calliper 2 of a disk brake for a utility vehicle, in particular a truck or a bus. The calliper 2 straddles a brake disk (not shown) and the calliper 2 is displaceably fastened to the brake support (not shown) of the vehicle in a known manner.

The calliper 2 is axially displaceable along two guide pins. The calliper 2 is slidably mounted over a first support bearing 3 including the first guide pin 6 and a second support bearing 4 including the second guide pin 7. Hereby, the calliper 2 is slidably mounted on the two parallel placed guide pins 6, 7 so that the calliper 2 can slide between a first position where the brake is activated and a second position where the brake is inactive, i.e. the brake pads does not exert any pressure on the brake disk. The calliper will also slide on the guide pins to compensate for wear of the brake pads.

The first bearing 3 includes a first bushing 15 which is pressed into the bore 16 of the calliper 2. The bushing 15 is an annular metal member pressed into the hole and is used as a liner in the hole. The purpose is to achieve a low friction and a tight fitting with substantially no play to the guide pin. The bushing is preferably made in a low-friction material such as a brass composition. Such a bushing is well-known in the art and is not described further. The guide pin 6 extends through the bushing 15 and is fixed to the brake support (not shown). The second support bearing 4 includes a bushing 8 which is pressed into the bore 9 of the calliper 2. The guide pin 7 extends through the bushing 8 and is fixed to the brake support (not shown).

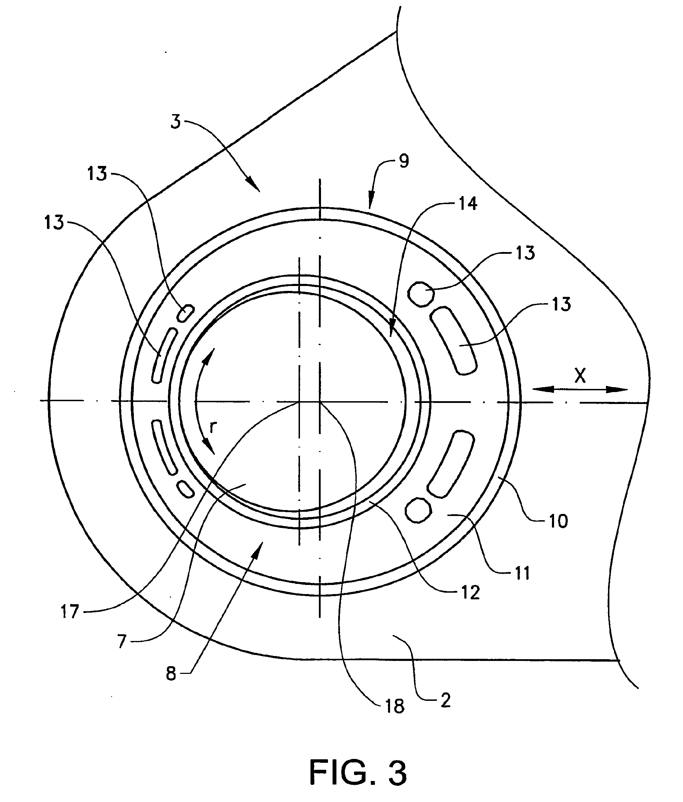

With reference to figures 2 and 3, the invention is shown in more detail. The second guide pin 7 is mounted extending through a guide bushing 8 which is mounted in a bore 9 in the calliper 2. The bushing 8 comprises an outer cylindrical member 10 which preferably has circular cross-sectional shape and is pressed into the correspondingly sized bore 9 of the calliper 2. The bushing 8 further comprises an inner member 12, which also has a circular cross-sectional shape. Between the outer ring 10 and the inner ring 12 a resilient material 11, preferably rubber or plastic, is provided.

The outer member 10 of the bushing 8 is provided with an external diameter which corresponds with the diameter of the bore 9 of the calliper 2 in such a manner that the bushing is mounted with a press fitting in the bore 9 of the calliper 2. The inner member 12 has an inner circular opening 14 with an inner diameter which is larger than the diameter of the guide pin 7. The bushing 8 is mounted in the calliper 2 in such a way that the centre 18 of the bushing 8 is offset to the centre 17 of the guide pin 7 so that a force is created between the guide pin and the bushing wall. This mounting will pretension the second bearing such that a position tolerances between the two guide pins are achieved. The guide pin 7 will, due to the pretension, bear at the bushing 8 constantly. This pretension will thus eliminate the knocking noise caused by the play between the guide pin and the bushing of the prior art. The pretension will also compensate for tolerances caused by wear on the guide pin and/or bushing. The resilient material is dimensioned to take up all production tolerances and also to allow for a predetermined minimum pre-tensioning of the bushing for all tolerance cases.

Since the calliper is mounted so that the two bearings are prestressed, the guide pin 7 will not knock against the inner member 12 of the bush 8 when the brake is inactive, but will slide or roll against the inner member 12 in a radial manner along the arrow denoted r. The mounting of the second guide pin 7 in a prestressed manner ensures a constant contact between the guide pin 7 and the contact surface of the inner member 12 of the bush 8 due to the compression of the resilient material 11 of the guide bush 8.

As shown in fig. 3, the resilient rubber material is provided with cavities 13, which preferably are through-going holes so they are visible for the worker who is assembling the brake or to a mounting tool. These cavities 13 are provided in two sectors that are situated opposite each other on each side of the inner ring 12. These two sectors of cavities 13 are provided such that the bushing 8 has a first compression resistance in a radial direction of the bush corresponding to a plane defined by the two guide pins 6, 7 when the bushing is mounted in the calliper. This plane is denoted with the arrow x. The bushing 8 has a second compression resistance in a direction perpendicular to said guide pin plane, wherein the first compression resistance is lower than the second compression resistance. The different compression resistances can also be obtained by using different materials for different directions. Accordingly, as shown in fig. 3, the resilient material on one side of the bushing 8 is slightly compressed and the other side of the bushing is slightly expanded by the offset mounting of the guide pin and the bushing.

Another advantage of the invention is that the pre-tensioning of the bushing 8 with regards to the second guide pin will also compensate for wear in the guide pin 7 and the inner member of the bushing 8. Also wear in the first guide pin 6 and the bushing 15 will be compensated for. Normally, the guide pins are made of hard steel and the bushings of a low-friction material, e.g. a brass composition that has a lower wear resistance than the guide pin. The invention thus allows for the use of a bushing material with an even lower friction, and a possible lower wear resistance, in order to improve the performance of the brake further, since the wear will be compensated for.

In the first embodiment of the invention, a guide bushing with a circular cross-section has been described. In a further embodiment, it would also be possible to use a guide bushing with an oval cross-section or a guide bushing with a circular outer member and an oval inner member. It would also be possible to attach the resilient material directly to the calliper, thus the circular outer member would be superfluous.

Above, the invention is described with reference to a preferred embodiment. However, it is realised that other embodiments may be provided without departing from the scope of the invention as defined in the accompanying claims. As an example, the resilient material may be provided in other materials than rubber and the material may be provided with different densities in sectors instead of - or as a supplement to - the cavities.

## Claims

1. A sliding arrangement for a disk brake, comprising:
a calliper (2) adapted to engage a brake disk;
a first and a second support bearing (3, 4) for fixing said calliper to a brake support of the vehicle so that the calliper is axially slideable relative to the brake disk, where the first support bearing (3) includes a first guide pin (6) and a first guide bushing (15) and the second support bearing (4) includes a second guide pin (7) and a second guide bushing (8), where said first guide pin (6) and guide bushing (15) have substantially no play between their sliding surfaces and said second guide pin (7) and guide bushing (8) have a play between their sliding surfaces;
**characterised in that**
the second guide bushing (8) comprises an inner (12) and an outer (10) annular metal member with an annular member (11) of resilient material therebetween, and that said second guide bushing (8) is mounted such that the centre (18) of said second guide bushing (8) is offset a distance to the centre (17) of said second guide pin (7) in a plane defined between the centre axes of first and second guide pins (6,7) respectively.

2. A sliding arrangement according to claim 1, wherein said second guide bushing (8) is provided with a first compression resistance in a first radial direction and a second compression resistance in a second radial directions of the bushing.

3. A sliding arrangement according to claim 2, wherein said first radial direction and said second radial directions are perpendicular to each other.

4. A sliding arrangement according to claims 2 or 3, wherein said first radial direction of the bushing corresponds to a plane defined by the two guide pins (6, 7).

5. A sliding arrangement according to any of claims 2 to 4, wherein the first compression resistance is lower than the second compression resistance.

6. A sliding arrangement according to claim 5, wherein said lower first compression resistance is provided by one or more cavities (13) in at least one section of the annular resilient material (11).

7. A sliding arrangement according to any of the preceding claims, wherein the resilient material (11) is bonded to the inner (12) and the outer (10) annular metal member.

8. A sliding arrangement according to any of the preceding claims, wherein the annular inner member (12) is made of a low friction material, such as brass or a brass composition.

9. A sliding arrangement according to any of the preceding claims, wherein the outer annular metal member (10) is comprised in the calliper (2), such that the resilient material (11) is bonded directly to said calliper (2).

10. A disk brake for a vehicle, comprising a sliding arrangement according to any of claims 1 to 9.

11. A vehicle comprising a plurality of disk brakes according to claim 10

## Patentansprüche

1. Gleitanordnung für eine Scheibenbremse mit
einem Bremssattel (2), der für einen Eingriff an einer Bremsscheibe ausgelegt ist,
einem ersten und einem zweiten Trägerlager (3, 4) zur Befestigung des Bremssattels an einem Bremsträger des Fahrzeugs, so dass der Bremssattel axial bezüglich der Bremsscheibe gleitend verschiebbar ist, wobei das erste Trägerlager (3) einen ersten Führungsstift (6) und eine erste Führungshülse (15) aufweist und das zweite Trägerlager (4) einen zweiten Führungsstift (7) und eine zweite Führungshülse (8) aufweist, wobei der erste Führungsstift (6) und die erste Führungshülse (15) im Wesentlichen kein Spiel zwischen ihren Gleitflächen aufweisen und der zweite Führungsstift (7) und die zweite Führungshülse (8) ein Spiel zwischen ihren Gleitflächen aufweisen, **dadurch gekennzeichnet, dass**
die zweite Führungshülse (8) ein inneres (12) und ein äußeres (10) ringförmiges Metallelement mit einem dazwischen angeordneten Ringelement (11) aus elastischem Material umfasst, und dass die zweite Führungshülse (8) so angebracht ist, dass das Zentrum (18) der zweiten Führungshülse (8) in einem Abstand zu dem Zentrum (17) des zweiten Führungsstiftes (7) in einer Ebene versetzt ist, die zwischen den Mittelachsen des ersten bzw. zweiten Stifts (6, 7) definiert ist.

2. Gleitanordnung nach Anspruch 1, wobei die zweite Führungshülse (8) mit einem ersten Kompressionswiderstand in einer ersten Radialrichtung und einem zweiten Kompressionswiderstand in einer zweiten Radialrichtung der Hülse versehen ist.

3. Gleitanordnung nach Anspruch 2, wobei die erste Radialrichtung und die zweite Radialrichtung senkrecht zueinander sind.

4. Gleitanordnung nach Anspruch 2 oder 3, wobei die erste Radialrichtung der Hülse einer Ebene entspricht, die durch die zwei Führungsstifte (6, 7) definiert wird.

5. Gleitanordnung nach einem der Ansprüche 2 bis 4, wobei der erste Kompressionswiderstand geringer ist als der zweite Kompressionswiderstand.

6. Gleitanordnung nach Anspruch 5, wobei der erste Kompressionswiderstand durch einen oder mehrere Hohlräume (13) in wenigstens einem Abschnitt des ringförmigen elastischen Materials (11) geschaffen wird.

7. Gleitanordnung nach einem der vorhergehenden Ansprüche, wobei das elastische Material (11) mit dem inneren (12) und dem äußeren (10) ringförmigen Metallelement gebonded ist.

8. Gleitanordnung nach einem der vorhergehenden Ansprüche, wobei das ringförmige innere Element (12) aus einem Material mit geringer Reibung hergestellt ist, wie zum Beispiel Messing oder einer Messinglegierung.

9. Gleitanordnung nach einem der vorhergehenden Ansprüche, wobei das äußere ringförmige Metallelement (10) von dem Bremssattel (2) umfasst wird, so dass das elastische Material (11) direkt an den Bremssattel (2) gebonded ist.

10. Scheibenbremse für ein Fahrzeug mit einer Gleitanordnung nach einem der Ansprüche 1 bis 9.

11. Fahrzeug mit einer Vielzahl von Scheibenbremsen nach Anspruch 10.

## Revendications

1. Agencement coulissant pour un frein à disque, comprenant :
un patin (2) adapté pour entrer en prise avec un disque de frein ;
des premier et second paliers de support (3, 4) pour fixer ledit patin à un support de frein du véhicule de sorte que le patin peut être coulissé de manière axiale par rapport au disque de frein, le premier palier de support (3) comprenant une première broche de guidage (6) et une première bague de guidage (15) et le second palier de support (4) comprenant une seconde broche de guidage (7) et une seconde bague de guidage (8), lesdites premières broche de guidage (6) et bague de guidage (15) ne présentant essentiellement pas de jeu entre leurs surfaces de coulissement et lesdites secondes broche de guidage (7) et bague de guidage (8) présentant un jeu entre leurs surfaces de coulissement ;
**caractérisé en ce que**
la seconde bague de guidage (8) comprend un élément métallique annulaire intérieur (12) et un élément métallique annulaire extérieur (10) avec, entre ceux-ci, un élément annulaire (11) en matériau résiliant, et ladite seconde bague de guidage (8) est montée de sorte que le centre (18) de ladite seconde bague de guidage (8) est décalé d'une certaine distance par rapport au centre (17) de ladite seconde broche de guidage (7) dans un plan défini entre les axes centraux des première et seconde broches de guidage (6, 7), respectivement.

2. Agencement coulissant selon la revendication 1, dans lequel ladite seconde bague de guidage (8) est munie d'une première résistance à la compression dans une première direction radiale et d'une seconde résistance à la compression dans une seconde direction radiale de la bague.

3. Agencement coulissant selon la revendication 2, dans lequel ladite première direction radiale et ladite seconde direction radiale sont perpendiculaires l'une par rapport à l'autre.

4. Agencement selon la revendication 2 ou 3, dans lequel ladite première direction radiale de la bague correspond à un plan défini par les deux broches de guidage (6, 7).

5. Agencement coulissant selon l'une quelconque des revendications 2 à 4, dans lequel la première résistance à la compression est inférieure à la seconde résistance à la compression.

6. Agencement coulissant selon la revendication 5, dans lequel ladite première résistance à la compression, inférieure, est munie d'une ou plusieurs cavités (13) dans au moins une section du matériau résiliant annulaire (11).

7. Agencement coulissant selon l'une quelconque des revendications précédentes, dans lequel le matériau résiliant (11) est lié aux éléments métalliques annulaires intérieur (12) et extérieur (10).

8. Agencement coulissant selon l'une quelconque des revendications précédentes, dans lequel l'élément annulaire intérieur (12) est réalisé en un matériau à coefficient de frottement réduit, comme du laiton ou une composition de laiton.

9. Agencement coulissant selon l'une quelconque des revendications précédentes, dans lequel l'élément métallique annulaire extérieur (10) est compris dans le patin (2), de sorte que le matériau résiliant (11) est lié directement audit patin (2).

10. Frein à disque pour un véhicule, comprenant un agencement coulissant selon l'une quelconque des revendications 1 à 9.

11. Véhicule comprenant une pluralité de freins à disque selon la revendication 10.
